(19) Europäisches Patentamt / European Patent Office / Office européen des brevets

(11) EP 2 181 153 B1

(12) **EUROPÄISCHE PATENTSCHRIFT**

(45) Veröffentlichungstag und Bekanntmachung des Hinweises auf die Patenterteilung:
**25.02.2015 Patentblatt 2015/09**

(21) Anmeldenummer: **08801512.8**

(22) Anmeldetag: **02.08.2008**

(51) Int Cl.:
***C08K 9/08*** *(2006.01)* ***C08L 69/00*** *(2006.01)*

(86) Internationale Anmeldenummer:
**PCT/EP2008/006389**

(87) Internationale Veröffentlichungsnummer:
**WO 2009/021648 (19.02.2009 Gazette 2009/08)**

(54) **GLASFASERVERSTÄRKTE POLYCARBONAT-FORMMASSEN**

GLASS FIBER-REINFORCED POLYCARBONATE MOLDING MATERIALS

MATIÈRES MOULABLES EN POLYCARBONATE CHARGÉ DE FIBRES DE VERRE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **16.08.2007 DE 102007038438**

(43) Veröffentlichungstag der Anmeldung:
**05.05.2010 Patentblatt 2010/18**

(73) Patentinhaber: **Bayer Intellectual Property GmbH**
**40789 Monheim (DE)**

(72) Erfinder:
- **SEIDEL, Andreas**
  **41542 Dormagen (DE)**
- **ERKELENZ, Michael**
  **47239 Duisburg (DE)**
- **WENZ, Eckhard**
  **50679 Köln (DE)**

(74) Vertreter: **BIP Patents**
**c/o Bayer Intellectual Property GmbH**
**Creative Campus Monheim**
**Alfred-Nobel-Straße 10**
**40789 Monheim (DE)**

(56) Entgegenhaltungen:
**EP-A- 1 038 920 EP-B1- 1 240 250**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

**Beschreibung**

Die Erfindung betrifft glasfaserverstärkte Polycarbonat-Zusammensetzungen und Formmassen, die sich gegenüber dem Stand der Technik durch eine hohe Steifigkeit, eine hohe Fließfähigkeit, große Verarbeitungsstabilität, eine gute Chemikalienbeständigkeit und durch eine gute Alterungsbeständigkeit gegenüber Licht- und Wärmeeinflüssen auszeichnen.

Zusammensetzungen enthaltend Polycarbonat und kautschukmodifizierten Styrolpolymeren, wie beispielsweise ABS (Acrylnitril-Butadien-Styrol-Polymerisate), sind für ihre Ausgewogenheit an hervorragenden mechanischen Eigenschaften und guter Schmelzefließfähigkeit bekannt. Sie werden in verschiedensten Anwendungsbereichen eingesetzt, beispielsweise im Automobilbau, im Bausektor sowie in Gehäusen von Büromaschinen und Haushaltsgeräten.

Zur Herstellung großflächiger Formteile ist in der Regel ein geringer thermischer Ausdehnungskoeffizient und eine gute Maßhaltigkeit sowie Formstabilität und eine hohe Steifigkeit erforderlich. Derartige Eigenschaften können durch Zusatz von Füll- oder Verstärkungsstoffen erzielt werden. Hohe E-Module können insbesondere durch Zusatz faseriger Verstärkungsstoffe realisiert werden. Der Zusatz der Füll- bzw. Verstärkungsstoffe beeinflusst jedoch im Allgemeinen nachteilig die Zähigkeit sowie insbesondere auch die Fließeigenschaften der Polymerschmelzen, d. h. das Verarbeitungsverhalten. Als Folge sind in der Regel erhöhte Verarbeitungstemperaturen notwendig, welche eine weitere Absenkung der Materialzähigkeit nach sich zieht. Durch diese Rahmenbedingungen sind die realisierbaren Füllgrade an Verstärkungsstoff und damit die erreichbaren Materialsteifigkeiten faktisch limitiert und sehr dünnwandige großflächige Formteile mit solchen, den im Folgenden beschriebenen Stand der Technik entsprechenden Polycarbonatzusammensetzungen häufig nicht darstellbar. Für diese Anwendungsgebiete besteht die Anforderung, solche Polycarbonat-Zusammensetzungen mit verbesserter Fließfähigkeit und höherem E-Modul mit über ein breites Verarbeitungsfenster hinweg guter und gegenüber Wärmealterung stabiler Zähigkeit bereitzustellen. Da aus derartigen Zusammensetzungen hergestellten Formteile häufig lackiert werden und im Rahmen der diesbezüglich erforderlichen Nachbehandlung in der Regel mit Chemikalien wie beispielsweise Lacklösungsmitteln in Kontakt kommen, besteht eine weitere Anforderung in einer ausreichenden Chemikalienbeständigkeit. Daher kommt der Einsatz von Polycarbonaten mit niedrigem Molekulargewicht zur Verbesserung der Polymerschmelzefließfähigkeit nicht in Betracht, da diese üblicherweise zu einer nachteiligen Beeinflussung der Spannungsrissbeständigkeit führen.

Glasfaserverstärkte Polycarbonat-Zusammensetzungen enthaltend kautschukmodifizierte Vinylcopolymerisate sind aus dem Stand der Technik bekannt.

WO-A 00/39210 offenbart Polycarbonat-Zusammensetzungen enthaltend Polycarbonat, Styrolharz, Phosphorsäureester und Verstärkungsmittel (z.B. Glasfasern) sowie gegebenenfalls ein Pfropfpolymer auf Basis eines Silikon-Acrylat-Kompositkautschuks mit einer Vinylmonomer-basierenden Pfropfhülle, die sich durch eine verbesserte Hydrolysebeständigkeit, gute Flammwidrigkeit und durch verbesserte mechanische Eigenschaften auszeichnen. Die zum Einsatz kommenden Styrolharze enthalten ein Pfropfpolymer mit einer Kautschukgrundlage. Es werden keine Glasfaserschlichten offenbart.

EP-A 1 240 250 offenbart Polycarbonat-Zusammensetzungen enthaltend 10 - 93 Gew.-% Polycarbonat, 3 - 50 Gew.-% Pfropfpolymerisat mit kautschukelastischer Grundlage, 3 - 50 Gew.-% thermoplastisches Copolymerisat und 1 - 20 Gew.-% einer Mischung aus teilchenförmigen mineralischen und faserförmigen Füllstoff, welche sich durch eine reduzierte thermische Ausdehnung, gute Zähigkeit, gute Dimensionsstabilität und hohe Fließfähigkeit sowie durch eine im Angußbereich verbesserte Oberflächenqualität auszeichnen.

EP-A 0 624 621 offenbart Polycarbonat-Zusammensetzungen enthaltend 10 - 80 Gew.-% Polycarbonat, 10 - 80 Gew.-% kautschukmodifiziertes Pfropfpolymerisat, 5 - 50 Gew.-% Glasfasern mit einer Polyolefinwachs enthaltenden Beschichtung, die sich durch eine verbesserte Zähigkeit und Duktilität auszeichnen.

EP-A 0 345 652 offenbart Polycarbonat-Zusammensetzungen enthaltend 10 - 75 Gew.% Polycarbonat, 10 - 50 Gew.-% Pfropfmischpolymerisat auf Kautschukgrundlage, bis zu 50 Gew.% Styrol-Copolymer, 0,5 - 50 Gew.-% Terpolymerisat enthaltend *tert*-Butyl(meth)acrylat und 5 bis 50 Gew.-% Verstärkungsmittel (z.B. Glasfasern), die sich durch eine hohe Festigkeit, gute Zähigkeit und durch eine geringe Gelbfärbung auszeichnen. Die in dieser zitierten Anmeldung zum Einsatz kommenden Glasfasern sind im Allgemeinen mit einer Schlichte und einem Haftvermittler ausgerüstet, wobei jedoch die Zusammensetzung der Schlichte nicht offenbart ist.

Die oben zitierten Dokumente des Stands der Technik offenbaren aber keine Zusammensetzungen, die Polycarbonat, kautschukfreie Vinylcopolymerisate (beispielsweise Styrol-Acrylnitril-Copolymere), und keine oder nur sehr geringe Mengen (d.h. bis zu 2 Gew.-%) an Kautschuk-haltigem Pfropfpolymerisat enthalten.

Nachteile der im Stand der Technik beschriebenen Zusammensetzungen, welche kautschukmodifizierte Pfropfpolymerisate in Mengen über 2 Gew.-% enthalten, sind eine zu geringe Schmelzefließfähigkeit und eine nicht ausreichende Alterungsbeständigkeit.

Aus dem Stand der Technik sind auch Zusammensetzungen enthaltend Polycarbonat, Glasfasern und kautschukfreies Vinylcopolymerisat bekannt, welche keine oder nur sehr geringe Mengen an kautschukmodifizierten Vinylcopolymerisaten enthalten.

WO-A 84/04317 offenbart Polycarbonat-Zusammensetzungen enthaltend Polycarbonat, Styrolharz, ungeschlichtete Glasfasern und ein Polyhydrogensiloxan, welche sich durch eine hohe Schlagzähigkeit und einen hohen Modul auszeichnen.

EP-A 0 647 679 offenbart Polycarbonat-Zusammensetzungen enthaltend spezielle Copolycarbonate mit bisphenolischen und resorcinolischen Monomereinheiten, kautschukenthaltendes Copolymer und/oder Copolymer aus vinylaromatischen und vinylcyanidischen Monomerkomponenten sowie anorganischen Füllstoff (z.B. Glasfasern), die sich durch eine gute Fließfähigkeit, hohe Schlagzähigkeit und gute Oberflächengüte auszeichnen. Glasfaserschlichten werden nicht offenbart.

EP-A 1 038 920 offenbart Polycarbonat-Zusammensetzungen im wesentlichen bestehend aus einem speziellen aromatischen Polycarbonat hergestellt durch Schmelzepolymerisation, einem Harz auf Styrolbasis (beispielsweise ein Styrol-Acrylnitril-Copolymer mit einem Styrolgehalt von mindestens 20%, bevorzugt mindestens 30%), einem verstärkenden faserigen Füllstoff und gegebenenfalls einem elastomeren Polymer, die sich durch eine verbesserte Feucht-Warm-Beständigkeit sowie eine verbesserte Zähigkeit auszeichnen. Es wird offenbart, dass die eingesetzten Glasfasern mit einer Schlichte aus Polymeren (wie beispielsweise Epoxydharz, Urethan-Harz, Acryl-Harz, Nylon-Harz, usw.) überzogen sein können. In den Beispielen werden ausschließlich Zusammensetzungen offenbart, die Polyurethangeschlichtete Glasfasern enthalten.

WO-A 2006/040087 offenbart Polycarbonat-Zusammensetzungen enthaltend Polycarbonat, ein Terpolymer aus Styrol, Acrylnitril und Maleinsäureanhydrid und Langglasfasern, die sich durch eine Kombination von verbesserter Zugfestigkeit, E-Modul und Schlagzähigkeit auszeichnen. Bevorzugt enthalten diese Zusammensetzungen zusätzlich mindestens ein Polymer ausgewählt aus der Gruppe der kautschukhaltigen Pfropfpolymerisate und kautschukfreien Copolymerisate. Es ist offenbart, dass die Langglasfasern mit einer Schlichte oberflächenmodifiziert sein können, ohne dass Angaben zur Chemie der Schlichte offenbart werden.

Die im Stand der Technik offenbarten glasfaserverstärkten Polycarbonat-Zusammensetzungen auf Basis kautschukfreier Styrolharze weisen in der Regel zwar eine gute Schmelzefließfähigkeit und Alterungsbeständigkeit auf, jedoch zeichnen sie sich durch für bestimmte Anwendungsbereiche insbesondere bei höheren Verarbeitungstemperaturen unzureichende Zähigkeit sowie unzufriedenstellende Chemikalienbeständigkeit und Steifigkeit aus.

Daher lag dieser Erfindung die Aufgabe zu Grunde, leichtfließende und gegenüber Wärme- und Lichteinflüssen alterungsbeständige Polycarbonat-Zusammensetzungen mit verbesserter Verarbeitungsstabilität (d.h. eine auch bei höheren Verarbeitungstemperaturen stabile Zähigkeit), verbesserter Steifigkeit und verbesserter Chemikalienbeständigkeit bereitzustellen.

Überraschend wurde gefunden, dass diese Aufgabe erfüllt wird durch Zusammensetzungen enthaltend

A) 40 bis 70 Gew.-Teile Polycarbonat, Polyestercarbonat oder eine Mischung daraus,

B) 10 bis 50 Gew.-Teile, bevorzugt 15 bis 40 Gew.-Teile, insbesondere 20 bis 35 Gew.-Teile kautschukfreies Vinylcopolymerisat aus

B.1 70 bis 80 Gew.% bezogen auf Komponente B Styrol und

B.2 20 bis 30 Gew.-% bezogen auf Komponente B Acrylnitril,

C) 5 bis 50 Gew.-Teile, bevorzugt 7 bis 35 Gew.-Teile, insbesondere 8 bis 25 Gew.-Teile einer geschlichteten Glasfaser, mit

C.1 einer Glasfaser ausgewählt aus mindestens einer Komponente der Gruppe bestehend aus Endlosfaser, Langglasfaser und Schnittglasfaser,

C.2 einer Schlichte enthaltend ein Epoxidpolymer, und

C.3 gegebenenfalls einem Haftvermittler ist,

wobei die Schlichte C.2 im Wesentlichen bestehend aus

C.2.1 50 bis 100 Gew.-% bezogen auf C.2 Epoxidpolymer und

C.2.2 0 bis 50 Gew.-%, bezogen auf C.2 eines oder mehrerer weiterer Polymere ausgewählt aus der Gruppe der Polyurethane, Polyolefine, acrylatenthaltende Polymere, styrolenthaltende Polymere und Polyamide,

D) 0 bis 2 Gew.-Teile, bevorzugt 0 bis 1 Gew.-Teile, besonders bevorzugt ist die Zusammensetzung frei von kautschukmodifizierten Pfropfpolymerisaten, und

E) 0,1 bis 3 Gew.-Teile handelsüblicher Polymeradditive,wobei die Zusammensetzung frei ist von kautschukmodifizierten

Polymerisaten, welche von Komponente D) verschieden sind, und
wobei die Summe der Komponenten A + B + C + D + E auf 100 Gew.-Teile normiert ist.

**Komponente A**

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z. B. DE-A 3 077 934).

Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat möglich.

Diphenole zur Herstellung der aromatischen Polycarbonate und/oder aromatischen Polyestercarbonate sind vorzugsweise solche der Formel (I)

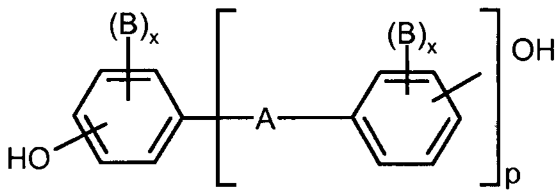

(I),

wobei

A eine Einfachbindung, $C_1$ bis $C_5$-Alkylen, $C_2$ bis $C_5$-Alkyliden, $C_5$ bis $C_6$-Cycloalkyliden, -O-, - SO-, -CO-, -S-, $-SO_2-$, $C_6$ bis $C_{12}$-Arylen, an das weitere aromatische gegebenenfalls Heteroatome enthaltende Ringe kondensiert sein können,
oder ein Rest der Formel (II) oder (III)

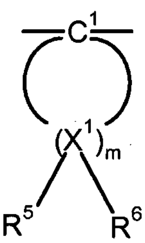

(II)

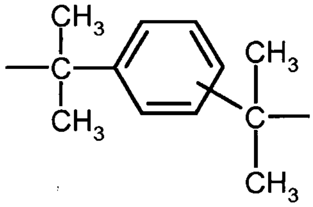

(III)

B jeweils $C_1$ bis $C_{12}$-Alkyl, vorzugsweise Methyl, Halogen, vorzugsweise Chlor und/oder Brom

x jeweils unabhängig voneinander 0, 1 oder 2,

p 1 oder 0 sind, und

$R^5$ und $R^6$ für jedes $X^1$ individuell wählbar, unabhängig voneinander Wasserstoff oder $C_1$ bis $C_6$-Alkyl, vorzugsweise Wasserstoff, Methyl oder Ethyl,

$X^1$ Kohlenstoff und

m eine ganze Zahl von 4 bis 7, bevorzugt 4 oder 5 bedeuten, mit der Maßgabe, dass an mindestens einem

Atom $X^1$, $R^5$ und $R^6$ gleichzeitig Alkyl sind.

Bevorzugte Diphenole sind Hydrochinon, Resorcin, Dihydroxydiphenole, Bis-(hydroxyphenyl)-$C_1$-$C_5$-alkane, Bis-(hydroxyphenyl)-$C_5$-$C_6$-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und $\alpha,\alpha$-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxy-phenyl)-2-methylbutan, 1,1-Bis-(4-hydroxyphenyl)-cyclohexan, 1,1--Bis-(4-hydroxyphenyl)-3.3.5-trimethylcyclohexan, 4,4'-Dihydroxydiphenylsulfid, 4,4'-Dihydroxydiphenylsulfon sowie deren di-und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol-A).

Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-[2-(2,4,4-Trimethylpentyl)]-phenol, 4-(1,3-Tetramethylbutyl)-phenol gemäß DE-A 2 842 005 oder Monoalkylphenol oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol%, und 10 Mol%, bezogen auf die Molsumme der jeweils eingesetzten Diphenole.

Die thermoplastischen, aromatischen Polycarbonate können in bekannter Weise verzweigt sein, und zwar vorzugsweise durch den Einbau von 0,05 bis 2,0 Mol%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate gemäß Komponente A können auch 1 bis 25 Gew.%, vorzugsweise 2,5 bis 25 Gew.%, bezogen auf die Gesamtmenge an einzusetzenden Diphenolen, Polydiorganosiloxane mit Hydroxyaryloxy-Endgruppen eingesetzt werden. Diese sind bekannt (US 3 419 634) und nach literaturbekannten Verfahren herstellbar. Die Herstellung Polydiorganosiloxanhaltiger Copolycarbonate ist in der DE-A 3 334 782 beschrieben.

Bevorzugte Polycarbonate sind neben den Bisphenol-A-Homopolycarbonaten die Copolycarbonate von Bisphenol-A mit bis zu 15 Mol%, bezogen auf die Molsummen an Diphenolen, anderen als bevorzugt oder besonders bevorzugt genannten Diphenolen, insbesondere 2,2-Bis(3,5-dibrom-4-hydroxyphenyl)-propan.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch $C_1$ bis $C_{22}$-Alkylgruppen oder durch Halogenatome substituiert sein können, sowie aliphatische $C_2$ bis $C_{22}$-Monocarbonsäurechloride in Betracht.

Die Menge an Kettenabbrechern beträgt jeweils 0,1 bis 10 Mol%, bezogen im Falle der phenolischen Kettenabbrecher auf Mol Diphenol und im Falle von Monocarbonsäurechlorid-Kettenabbrecher auf Mol Dicarbonsäuredichlorid.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu DE-A 2 940 024 und DE-A 3 007 934).

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbon-säuretetrachlorid oder Pyromellithsäuretetrachlorid, in Mengen von 0,01 bis 1,0 Mol% (bezogen auf eingesetzte Dicarbonsäuredichloride) oder drei- oder mehrfunktionelle Phenole, wie Phloroglucin, 4,6-Dimethyl-2,4,6-tri-(4-hydroxyphenyl)-hept-2-en, 4,6-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol%, insbesondere bis zu 80 Mol%, besonders bevorzugt bis zu 50 Mol%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

In einer bevorzugten Ausführungsform weist die Komponente A ein gewichtsgemitteltes Molekulargewicht Mw (ermittelt durch GPC, Lichtstreuung oder Sedimentation) von 23,000 g/mol bis 40,000 g/mol, bevorzugt von 24,000 g/mol bis 35,000 g/mol, insbesondere von 25,000 bis 32,000 g/mol auf

**Komponente B**

Komponente B ist ein kautschukfreies Vinylcopolymerisat aus

B.1 70 bis 80 Gew.-%, bevorzugt 72 bis 78 Gew.%, insbesondere 75 bis 78 Gew.-% (jeweils bezogen auf Komponente B) Styrol und

B.2 20 bis 30 Gew.-%, bevorzugt 22 bis 28 Gew.-%, insbesondere 22 bis 25 Gew.% (jeweils bezogen auf Komponente B) Acrylnitril

Die Copolymerisate B sind harzartig, thermoplastisch und kautschukfrei.

Derartige Copolymerisate sind bekannt und lassen sich durch radikalische Polymerisation, insbesondere durch Emulsions-, Suspensions-, Lösungs- oder Massepolymerisation herstellen.

Die (Co)Polymerisate besitzen vorzugsweise mittlere Molekulargewichte $M_w$ (Gewichtsmittel, ermittelt durch GPC, Lichtstreuung oder Sedimentation) zwischen 15.000 und 250.000 g/mol, bevorzugt zwischen 50.000 und 200.000 g/mol, insbesondere zwischen 80,000 und 160.000 g/mol.

**Komponente C**

Komponente C ist eine geschlichtete Glasfaser mit

C.1 einer Glasfaser ausgewählt aus mindestens einer Komponente der Gruppe bestehend aus Endlosfaser (rovings), Langglasfaser und Schnittglasfaser,

C.2 einer Schlichte enthaltend ein Epoxidpolymer, wobei beispielsweise die Schlichte die Oberfläche der Glasfaser teilweise oder vollständig bedeckt und/oder eventuell vorhandene Poren der Glasfaser füllt, und

C.3 gegebenenfalls einem Haftvermittler.

Schlichte C.2 und Haftvermittler C.3 kommen in der Komponente C bevorzugt in einer solchen Menge zum Einsatz, dass der Gehalt an Kohlenstoff gemessen an der Komponente C bei 0,1 bis1 Gew.-%, bevorzugt bei 0,2 bis 0,8 Gew.-%, besonders bevorzugt bei 0,3 bis 0,7 Gew.-% liegt.

Die Glasfaser gemäß Komponente C.1 werden vorzugsweise aus E-, A- oder C-Glas hergestellt. Der Durchmesser der Glasfaser beträgt bevorzugt 5 bis 25 $\mu$m, besonders bevorzugt 6 bis 20 $\mu$m, höchst bevorzugt 7 bis 15 $\mu$m. Die Langglasfasern weisen bevorzugt eine Länge von 5 bis 50 mm, besonders bevorzugt von 5 bis 30 mm, höchst bevorzugt von 7 bis 25 mm auf. Langglasfasern werden beispielsweise in WO-A 2006/040087 beschrieben. Die Schnittglasfasern weisen bevorzugt zu mindestens 70 Gew.-% der Glasfasern eine Länge von mehr als 60 $\mu$m auf.

Die Schlichte C.2 besteht im Wesentlichen aus

C.2.1 50 bis 100 Gew.-%, bevorzugt 70 bis 100 Gew.-%, besonders bevorzugt 80 bis 100 Gew.-% (jeweils bezogen auf C.2) Epoxidpolymer und

C.2.2 0 bis 50 Gew.-%, bevorzugt 0 bis 30 Gew.%, besonders bevorzugt 0 bis 20 Gew.-% (jeweils bezogen auf C.2) eines oder mehrerer weiterer Polymere ausgewählt aus der Gruppe bestehend aus Polyurethane, Polyolefine, acrylatenthaltende Polymere, styrolenthaltende Polymere und Polyamide.

Bevorzugt besteht die Schlichte C.2 ausschließlich aus Epoxidpolymer C.2.1 (d.h. die Schlichte C.2 ist frei von weiteren Polymeren gemäß Komponente C.2.2).

Bei dem Epoxidpolymer gemäß Komponente C.2.1 kann es sich beispielsweise um ein Epoxidharz, um einen Epoxidharz-Ester oder um ein Epoxidharz-Polyurethan handeln.

In bevorzugter Ausführungsform handelt es sich bei dem Epoxidpolymer gemäß Komponente C.2.1 um ein Epoxidharz hergestellt aus

C.2.1.1 Epichlorhydrin, und

C.2.1.2 einem bevorzugt aromatischen Alkohol, der mindestens zwei Hydroxylgruppen aufweist.

Vorzugsweise ist Komponente C.2.1.2 ein Phenolharz, zum Beispiel ein Novolak, oder eine Verbindung der Formel (I). Besonders bevorzugt ist Komponente C.2.1.2 Bisphenol-A.

Vorzugsweise ist Komponente C.3 ein Silan. Das Silan besitzt in bevorzugter Ausführungsform eine funktionelle Gruppe ausgewählt aus der Gruppe der Amino-Gruppe, Epoxy-Gruppe, Carboxylsäure-Gruppe, Vinyl-Gruppe und Mercapto-Gruppe zur Anbindung an das Polymer der Schlichte, sowie eine bis drei, bevorzugt drei Alkoxy-Gruppen zur Anbindung an die Glasfaser. Beispielsweise und bevorzugt wird als Komponente C.3 mindestens ein Silan ausgewählt aus der Gruppe bestehend aus Vinyltrichlorsilan, Vinyltriethoxysilan, Vinyltrimethoxysilan, γ-Methacryloxypropyltrimethoxysilan, β-(3,4-Epoxcyclohexyl)ethyltrimethoxysilane, γ-Glycidoxypropyltrimethoxysilan, N-β(Aminoethyl)γ-Aminopropyltrimethoxysilan, γ-Aminopropyltriethoxysilan, N-Phenyl-γ-Aminopropyltrimethoxysilan, γ-Mercaptopropyltrimethoxysilan und γ-Chloropropyltrimethoxysilan eingesetzt. Geschlichtete Glasfasern, welche die Komponente C.3 enthalten, weisen eine bessere Haftung der Schlichte an der Glasfaser auf.

**Komponente D**

Die Komponente D umfasst ein oder mehrere Pfropfpolymerisate von

D.1 5 bis 70 Gew-%, vorzugsweise 10 bis 60 Gew.%, insbesondere 20 bis 50 Gew.-% wenigstens eines Vinylmonomeren auf

D.2 30 bis 95 Gew.-%, vorzugsweise 40 bis 90 Gew.-%, insbesondere 50 bis 80 Gew.-% einer oder mehrerer Pfropfgrundlagen mit Glasübergangstemperaturen < 10°C, vorzugsweise < 0°C, besonders bevorzugt < -20°C.

Monomere D. 1 sind vorzugsweise Gemische aus

D.1.1 50 bis 99 Gew.-Teilen Vinylaromaten und/oder kernsubstituierten Vinylaromaten (wie Styrol, α-Methylstyrol, p-Methylstyrol, p-Chlorstyrol) und/oder Methacrylsäure-($C_1$-$C_8$)-Alkylester, wie Methylmethacrylat, Ethylmethacrylat, und

D.1.2 1 bis 50 Gew.-Teilen Vinylcyanide (ungesättigte Nitrile wie Acrylnitril und Methacrylnitril) und/oder (Meth)Acrylsäure-($C_1$-$C_8$)-Alkylester, wie Methylmethacrylat, n-Butylacrylat, t-Butylacrylat, und/oder Derivate (wie Anhydride und Imide) ungesättigter Carbonsäuren, beispielsweise Maleinsäureanhydrid und N-Phenyl-Maleinimid.

Bevorzugte Monomere D.1.1 sind ausgewählt aus mindestens einem der Monomere Styrol, α-Methylstyrol und Methylmethacrylat, bevorzugte Monomere D.1.2 sind ausgewählt aus mindestens einem der Monomere Acrylnitril, Maleinsäureanhydrid und Methylmethacrylat. Besonders bevorzugte Monomerkombinationen sind D.1.1 Styrol und D.1.2 Acrylnitril bzw. D.1.1 und D.1.2 Methylmethacrylat.

Die für die Pfropfpolymerisate D geeigneten Pfropfgrundlagen D.2 sind in bevorzugter Ausführungsform gesättigt, d.h. im Wesentlichen frei von Doppelbindungen. Besonders bevorzugt ist D.2 mindestens ein Kautschuk ausgewählt aus der Gruppe bestehend aus Acrylatkautschuke, Silikonkautschuke und Silikon-Acrylat-Kompositkautschuke. Höchst bevorzugt ist D.2 mindestens ein Kautschuk ausgewählt aus der Gruppe bestehend aus Silikonkautschuke und Silikon-Acrylat-Kompositkautschuke.

Geeignete Acrylatkautschuke gemäß D.2 sind vorzugsweise Polymerisate aus Acrylsäurealkylestern, gegebenenfalls mit bis zu 40 Gew.-%, bezogen auf D.2 anderen polymerisierbaren, ethylenisch ungesättigten Monomeren. Zu den bevorzugten polymerisierbaren Acrylsäureestern gehören $C_1$ bis $C_8$-Alkylester, beispielsweise Methyl-, Ethyl-, Butyl-, n-Octyl- und 2-Ethylhexylester; Halogenalkylester, vorzugsweise Halogen-$C_1$-$C_8$-alkylester, wie Chlorethylacrylat sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie Ethylenglykoldimethacrylat, Allylmethacrylat; mehrfach ungesättigte heterocyclische Verbindungen, wie Trivinyl- und Triallylcyanurat; polyfunktionelle Vinylverbindungen, wie Di- und Trivinylbenzole; aber auch Triallylphosphat und Diallylphthalat. Bevorzugte vernetzende Monomere sind Allylmethacrylat, Ethylenglykoldimethacrylat, Diallylphthalat und heterocyclische Verbindungen, die mindestens drei ethylenisch ungesättigte Gruppen aufweisen. Besonders bevorzugte vernetzende Monomere sind die cyclischen Monomere Triallylcyanurat, Triallylisocyanurat, Triacryloylhexahydros-triazin, Triallylbenzole. Die Menge der vernetzten Monomere beträgt vorzugsweise 0,02 bis 5, insbesondere 0,05 bis 2 Gew.-%, bezogen auf die Pfropfgrundlage D.2. Bei cyclischen vernetzenden Monomeren mit mindestens drei ethylenisch ungesättigten Gruppen ist es vorteilhaft, die Menge auf unter 1 Gew.-% der Pfropfgrundlage D.2 zu beschränken.

Bevorzugte "andere" polymerisierbare, ethylenisch ungesättigte Monomere, die neben den Acrylsäureestern gegebenenfalls zur Herstellung der Pfropfgrundlage D.2 dienen können, sind z.B. Acrylnitril, Styrol, $\alpha$-Methylstyrol, Acrylamide, Vinyl-$C_1$-$C_6$-alkylether, Methylmethacrylat.

Weitere geeignete Pfropfgrundlagen gemäß D.2 sind Silikonkautschuke mit pfropfaktiven Stellen, wie sie in den DE-OS 3 704 657, DE-OS 3 704 655, DE-OS 3 631 540 und DE-OS 3 631 539 beschrieben werden.

Die Pfropfcopolymerisate D werden durch radikalische Polymerisation bevorzugt durch Emulsionspolymerisation hergestellt.

Die Pfropfgrundlage D.2 hat im allgemeinen eine mittlere Teilchengröße ($d_{50}$-Wert) von 0,05 bis 1 $\mu$m, vorzugsweise 0,07 bis 0,5 $\mu$m, besonders bevorzugt 0,1 bis 0,4 $\mu$m. Die mittlere Teilchengröße $d_{50}$ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-1796) bestimmt werden.

Der Gelanteil der Pfropfgrundlage D.2 beträgt bei in Emulsionspolymerisation hergestellten Pfropfpolymerisaten bevorzugt mindestens 30 Gew.%, besonders bevorzugt mindestens 40 Gew.-%, insbesondere mindestens 50 Gew.-% (in Toluol gemessen). Der Gelgehalt wird bei 25°C in einem geeigneten Lösungsmittel als in diesen Lösungsmitteln unlöslicher Anteil bestimmt (M. Hoffmann, H. Krömer, R. Kuhn, Polymeranalytik I und II, Georg Thieme-Verlag, Stuttgart 1977).

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten D auch solche Produkte verstanden, die durch (Co)Polymerisation der Pfropfmonomere in Gegenwart der Pfropfgrundlage gewonnen werden und bei der Aufarbeitung mit anfallen. Diese Produkte können demnach auch freies, d.h. nicht chemisch an den Kautschuk gebundenes (Co)Polymerisat der Pfropfmonomere enthalten.

**E) <u>Weitere Komponenten</u>**

Die Zusammensetzung kann als Komponente E weitere Zusätze enthalten, wobei insbesondere Polymeradditive wie Flammschutzmittel (z.B. organische Phosphor- oder Halogenverbindungen, insbesondere Bisphenol-A basierendes Oligophosphat), Antidrippingmittel (beispielsweise Verbindungen der Substanzklassen der fluorierten Polyolefine, der Silikone sowie Aramidfasern), Gleit- und Entformungsmittel, beispielsweise Pentaerythrittetrastearat, Nukleiermittel, Antistatika, Stabilisatoren, von Komponente C verschiedene Füll- und Verstärkungsstoffe (beispielsweise Karbonfasern, Talk, Glimmer, Kaolin, $CaCO_3$) sowie Farbstoffe und Pigmente (beispielsweise Titandioxid oder Eisenoxid) in Frage kommen.

**<u>Herstellung der Formmassen und Formkörper</u>**

Die erfindungsgemäßen thermoplastischen Formmassen können beispielsweise hergestellt werden, indem man die jeweiligen Bestandteile in bekannter Weise vermischt und bei Temperaturen von 200°C bis 320°C, bevorzugt bei 240 bis 300°C in üblichen Aggregaten wie Innenknetern, Extrudern und Doppelwellenschnecken schmelzcompoundiert und schmelzextrudiert.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

In einer bevorzugten Ausführungsform erfolgt die Herstellung der erfindungsgemäßen Zusammensetzungen in einem Doppelwellenextruder, wobei die Komponenten A, B, D und E zunächst aufgeschmolzen und gemischt werden und die Glasfasern C dann in das Schmelzegemisch über einen Seitenextruder eingeleitet und in diesem dispergiert werden.

Gegenstand der Erfindung ist daher auch ein Verfahren zur Herstellung der erfindungsgemäßen Zusammensetzungen.

Die erfindungsgemäßen Formmassen können zur Herstellung von Formkörpern jeder Art verwendet werden. Diese können beispielsweise durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien.

Beispiele für solche Formkörper sind Folien, Profile, Gehäuseteile jeder Art, z.B. für Haushaltsgeräte wie Saftpressen, Kaffeemaschinen, Mixer; für Büromaschinen wie Monitore, Flatscreens, Notebooks, Drucker, Kopierer; Platten, Rohre, Elektroinstallationskanäle, Fenster, Türen und weitere Profile für den Bausektor (Innenausbau und Außenanwendungen) sowie Elektro- und Elektronikteile wie Schalter, Stecker und Steckdosen und Bauteile für Nutzfahrzeuge, insbesondere für den Automobilbereich. Die erfindungsgemäßen Zusammensetzungen eignen sich auch zur Herstellung von folgenden Formkörpern oder Formteilen: Innenausbauteile für Schienenfahrzeuge, Schiffe, Flugzeuge, Busse und andere Kraftfahrzeuge, Karosserieteile für Kraftfahrzeuge, Gehäuse von Kleintransformatoren enthaltenden Elektrogeräten, Gehäuse für Geräte zur Informationsverarbeitung und -Übermittlung, Gehäuse und Verkleidung von medizinischen Geräten, Massagegeräte und Gehäuse dafür, Spielfahrzeuge für Kinder, flächige Wandelemente, Gehäuse für Sicherheitseinrichtungen, wärmeisolierte Transportbehältnisse, Formteile für Sanitär- und Badausrüstungen, Abdeckgitter für Lüfteröffnungen und Gehäuse für Gartengeräte.

## Beispiele

**Komponente A:**

Lineares Polycarbonat auf Basis Bisphenol-A mit einem gewichtsgemittelten Molekulargewicht Mw von 28000 g/mol (bestimmt durch GPC).

**Komponente B-1:**

SAN-Copolymerisat mit einem Acrylnitrilgehalt von 23 Gew.-% und einem gewichtsgemittelten Molekulargewicht von etwa 130.000 g/mol.

**Komponente B-2:**

ABS-Polymerisat mit einem Acrylnitrilgehalt : Butadien :Styrol - Verhältnis von 20 : 28 : 52 Gew.-%, hergestellt in Emulsionspolymerisation.

**Komponente C-1:**

Schnittglasfaser mit einem mittleren Durchmesser von 13 μm und einer Schlichte aus Epoxidharz hergestellt aus Epichlorhydrin und Bisphenol-A. Der Kohlenstoffgehalt der Komponente C-1 beträgt 0,6 Gew.-%.

**Komponente C-2:**

Schnittglasfaser mit einem mittleren Durchmesser von 13 μm und einer Polyurethan-Schlichte. Der Kohlenstoffgehalt der Komponente C-1 beträgt 0,4 Gew.-%.

**Komponente D:**

Metablen® SRK200 (Mitsubishi Rayon, Japan): Styrol-Acrylnitril-gepfropfter Akrylat-Silikon-Kompositkautschuk, hergestellt in Emulsionspolymerisation

**Komponente E-1:** Pentaerythrittetrastearat
**Komponente E-2:** Phosphitstabilisator

## Herstellung und Prüfung der erfindungsgemäßen Formmassen

Das Mischen der Komponenten erfolgt auf einem Zweiwellenextruder ZSK-25 der Fa. Werner & Pfleiderer bei einer Massetemperatur von 260°C. Die Formkörper werden bei einer Massetemperatur von 260°C bzw. 300°C und einer Werkzeugtemperatur von 80°C auf einer Spritzgießmaschine Typ Arburg 270 E hergestellt.

Als Maß für die Schmelzefließfähigkeit dient die Schmelzeviskosität gemessen bei 260°C und einer Scherrate von 1000 $s^{-1}$ gemäß ISO 11443.

Die Schlagzähigkeit wird bestimmt bei 23°C gemäß ISO 180-1U an Prüfkörpern der Abmessung 80 mm x 10 mm x 4mm. Die Prüfkörper wurden bei einer Massetemperatur von 260°C bzw. 300°C abgespritzt. Die Änderung der Schlagzähigkeit $a_K$ bei Erhöhung der Verarbeitungstemperatur dient als Maß für die Verarbeitungsstabilität der Zusammensetzung und berechnet sich wie folgt:

$$Verarbeitungsstabilität = \frac{a_K^{260°C} - a_K^{300°C}}{a_K^{260°C}} * 100\%$$

Der E-Modul wird bestimmt an Prüfstäben, welche bei 260°C abgespritzt wurden, gemäß ISO 527.

Als Maß für die Chemikalienbeständigkeit dient die Spannungsriss-(ESC)-Beständigkeit in Rapsöl bei Raumtemperatur. Bestimmt wird die Zeit bis zum spannungsrissinduzierten Bruchversagen eines bei 260°C Massetemperatur abgespritzten Prüfkörpers der Abmessung 80 mm x 10 mm x 4mm, der mittels einer Spannschablone mit einer externen Randfaserdehnung von 2,4% beaufschlagt und im Medium vollständig eingetaucht wird. Die Messung erfolgt in Anlehnung an ISO 4599.

Als Maß für die Wärmealterungsbeständigkeit dient der Abfall der Schlagzähigkeit bestimmt bei 23°C gemäß ISO 180-1U an Prüfkörpern der Abmessung 80 mm x 10 mm x 4mm, welche bei 260°C abgespritzt wurden, während einer Heißluftlagerung bei 120°C über 1500 h.

Als Maß für die UV-Lichtbeständigkeit dient die Farbänderung (Änderung des Graumaßstabs) von Prüfkörpern der Abmessung 60 mm x 40 mm x 2 mm, die bei 260°C abgespritzt wurden, bei einer Heißlichtalterung gemäß VW-Norm PV 1303 über 6 Belichtungszyklen.

**Tabelle 1:** Formmassen und ihre Eigenschaften

| **Komponenten [Gew.-Teile]** | **1 (Vgl.)** | **2 (Vgl.)** | **3 (Vgl.)** | **4** | **5 (Vgl.)** | **6 (Vgl.)** | **7 (Vgl.)** | **8** | **9 (Vgl.)** | **10** | **11** | **12** |
|---|---|---|---|---|---|---|---|---|---|---|---|---|
| A PC | 60,64 | 60,64 | 60,64 | 60,64 | 49,75 | 49,75 | 49,75 | 49,75 | 61,81 | 61,94 | 49,46 | 43,52 |
| B-1 SAN | - | 28,83 | - | 28,83 | - | 29,85 | - | 29,85 | 21,93 | 26,97 | 29,67 | 25,72 |
| B-2 ABS | 28,83 | - | 28,83 | - | 29,85 | - | 29,85 | - | - | - | - | - |
| C-1 GF (Epoxid-geschlichtet) | - | - | 9,94 | 9,94 | - | - | 19,90 | 19,90 | 9,97 | 9,99 | 19,78 | 29,67 |
| C-2 GF (PUR-geschlichtet) | 9,94 | 9,94 | - | - | 19,90 | 19,90 | - | - | - | - | - | - |
| D Metablen SRK200 | - | - | - | - | - | - | - | - | 5,98 | 0,50 | 0,49 | 0,49 |
| E-1 PETS | 0,50 | 0,50 | 0,50 | 0,50 | 0,40 | 0,40 | 0,40 | 0,40 | 0,20 | 0,50 | 0,49 | 0,49 |
| E-2 Irganox B900 | 0,10 | 0,10 | 0,10 | 0,10 | 0,10 | 0,10 | 0,10 | 0,10 | 0,10 | 0,10 | 0,10 | 0,10 |
| **Eigenschaften** | | | | | | | | | | | | |
| Schlagzähigkeit $a_K^{260°C}$ [kJ/m²] | 30 | 25 | 43 | 39 | 23 | 27 | n.g. | 40 | 39 | 37 | 40 | 38 |
| Schlagzähigkeit $a_K^{300°C}$ [kJ/m²] | 33 | 17 | n.g. | 35 | n.g. | n.g. | n.g. | n.g. | 39 | 37 | 37 | 38 |
| Verarbeitungsstabilität [%] | -10,0 | 32,0 | n.g. | 10,3 | n.g. | n.g. | n.g. | n.g. | 0,0 | 0,0 | 7,5 | 0,0 |
| Schmelzeviskosität [Pas] | 315 | 193 | 329 | 229 | 333 | 187 | 356 | 202 | 247 | 212 | 198 | 233 |
| E-Modul [MPa] | 3736 | 5147 | 3961 | 5070 | 5729 | 7000 | 5994 | 7488 | 4623 | 5189 | 7604 | 10178 |
| ESC - Zeit bis zum Bruch [h] | 1,5 | 0,1 | n.g. | 21 | 0,5 | 0,02 | n.g. | 19 | 2,5 | 11 | 8 | 0,07 |
| Zähigkeitsänderung bei Wärmealterung (1500h bei 120°C) [%] | n.g. | n.g. | n.g. | n.g. | -41 | n.g. | n.g. | +4 | n.g. | n.g. | n.g. | n.g. |
| Farbänderung bei Heißlicht-Alterung (Graumaßstabsänderung in 6 Zyklen) | n.g. | n.g. | n.g. | n.g. | -1,5 | n.g. | n.g. | +/-0 | n.g. | n.g. | n.g. | n.g. |
| n.g. = nicht gemessen | | | | | | | | | | | | |

Der Tabelle 1 ist zu entnehmen, dass solche Zusammensetzungen enthaltend Butadienkautschukmodifiziertes Styrol-Harz (Vergleichsbeipiele 1, 3, 5, 7 und 9) bzw. SAN in Kombination mit einer größeren Menge eines kautschukmodifizierten Pfropfpolymers (Vergleichsbeispiel 9) eine unzureichende Fließfähigkeit und einen unzureichenden E-Modul gegenüber erfindungsgemäßen Beispielen gleichen Glasfasergehalts (Beispiele 4, 8, 10-12) aufweisen. Bei Verwendung von Butadienkautschuk modifizierten Styrolharzen (Vergleichsbeipiele 5) ist darüber hinaus auch die Wärmealterungs- und Lichtbeständigkeit unzufriedenstellend. Die Zusammensetzungen, die nicht Epoxidpolymer basierend geschlichtete Glasfasern enthalten (Vergleichsbeispiele 1, 2, 5 und 6) zeichnen sich gegenüber solchen vergleichbaren Zusammensetzungen mit Glasfasern mit einer Epoxidpolymer basierenden Schlichte durch eine schlechtere Zähigkeit aus. Die kautschukfreien Zusammensetzungen enthaltend Glasfasern ohne Epoxidpolymer basierende Schlichte (Vergleichsbeispiele 2 und 6) zeigen zwar eine gute Fließfähigkeit, jedoch eine sehr schlechte Chemikalienbeständigkeit und Verarbeitungsstabilität. Eine gute Kombination aus Fließfähigkeit, Steifigkeit, Chemikalienbeständigkeit, Zähigkeit, Verarbeitungsstabilität sowie Alterungsbeständigkeit unter Licht- und Wärmeeinflüssen wird nur in den erfindungsgemäßen Zusammensetzungen erzielt (Beispiele 4, 8, 10-12).

**Patentansprüche**

**1.** Zusammensetzung enthaltend

A) 40 bis 70 Gew.-Teile Polycarbonat, Polyestercarbonat oder eine Mischung daraus,
B) 10 bis 50 Gew.-Teile kautschukfreies Vinylcopolymerisat aus

B.1 70 bis 80 Gew.-% bezogen auf Komponente B Styrol und
B.2 20 bis 30 Gew.-% bezogen auf Komponente B Acrylnitril,

C) 5 bis 50 Gew.-Teile geschlichteten Glasfaser, wobei Komponente C eine geschlichtete Glasfaser mit

C.1 einer Glasfaser ausgewählt aus mindestens einer Komponente der Gruppe bestehend aus Endlosfaser, Langglasfaser und Schnittglasfaser,
C.2 einer Schlichte enthaltend ein Epoxidpolymer, und
C.3 gegebenenfalls einem Haftvermittler ist,

wobei die Schlichte C.2 im Wesentlichen bestehend aus

C.2.1 50 bis 100 Gew.% bezogen auf C.2 Epoxidpolymer und
C.2.2 0 bis 50 Gew.-%, bezogen auf C.2 eines oder mehrerer weiterer Polymere ausgewählt aus der Gruppe der Polyurethane, Polyolefine, acrylatenthaltende Polymere, styrolenthaltende Polymere und Polyamide,

D) 0 bis 2 Gew.-Teile kautschukmodifizierte Pfropfpolymerisate, und
E) 0,1-3 Gew.-Teile handelsübliche Polymeradditive,

wobei die Zusammensetzung frei ist von kautschukmodifizierten Polymerisaten, welche von Komponente D verschieden sind.

**2.** Zusammensetzung gemäß Anspruch 1, enthaltend 20 bis 35 Gew.-Teile kautschukfreies Vinylcopolymerisat (Komponente B).

**3.** Zusammensetzung gemäß einem der Ansprüche 1 oder 2, welche frei ist von kautschukmodifzierten Pfropfpolymerisaten (Komponente D).

**4.** Zusammensetzung gemäß Anspruch 1, in der als Epoxidpolymer C.2.1 ein Epoxidharz zum Einsatz kommt, hergestellt aus

C.2.1.1 Epichlorhydrin und
C.2.1.2 einem Alkohol, der mindestens zwei Hydroxylgruppen aufweist.

5. Zusammensetzung gemäß Anspruch 4, in der als bifunktionelle alkoholische Komponente C.2.1.2 Bisphenol-A zum Einsatz kommt.

6. Zusammensetzung gemäß einem der Ansprüche 1 bis 5, in der die geschlichtete Glasfaser gemäß Komponente C einen Kohlenstoffgehalt von 0,1 bis 1 Gew.-% aufweist.

7. Zusammensetzung gemäß einem der Ansprüche 1 bis 6, in welcher die Glasfaser gemäß Komponente C einen mittleren Durchmesser von 5 bis 25 μm aufweist.

8. Zusammensetzung gemäß einem der Ansprüche 1 bis 7, wobei als Komponente E mindestens ein Additiv ausgewählt aus der Gruppe bestehend aus Flammschutzmittel, Antidrippingmittel, Gleit- und Entformungsmittel, Nukleiermittel, Antistatika, Stabilisatoren, von Komponente C verschiedene Füll- und Verstärkungsstoffe, sowie Farbstoffe und Pigmente enthalten ist.

9. Zusammensetzung gemäß Anspruch 1, enthaltend als Komponente D ein Pfropfpolymerisat mit einer Kautschukgrundlage, die im Wesentlichen frei von Doppelbindungen ist.

10. Zusammensetzung gemäß Anspruch 9, enthaltend als Komponente D ein Pfropfpolymerisat mit einer Kautschukgrundlage ausgewählt aus der Gruppe bestehend aus Acrylatkautschuk, Silikonkautschuk und Silikon-Acrylat-Kompositkautschuk.

11. Zusammensetzung gemäß einem der vorhergehenden Ansprüche, **dadurch gekennzeichnet, dass** die Glasfaser eine Langglasfaser mit einer Länge von 5 bis 50 mm ist.

12. Verwendung der Zusammensetzung gemäß einem der Ansprüche 1 bis 11 zur Herstellung von Formkörpern.

13. Formkörper enthaltend eine Zusammensetzung gemäß einem der Ansprüche 1 bis 11.

## Claims

1. A composition containing

A) 40 to 70 parts by weight polycarbonate, polyester carbonate or a mixture thereof,
B) 10 to 50 parts by weight rubber-free vinyl copolymer, consisting of

B.1 70 to 80 wt.%, based on component B, styrene, and
B.2 20 to 30 wt.%, based on component B, acrylonitrile,

C) 5 to 50 parts by weight of sized glass fibre, wherein component C is a sized glass fibre with

C.1 a glass fibre selected from at least one component from the group consisting of continuous strands, long glass fibres and chopped glass strands,
C.2 a size containing an epoxy polymer, and
C.3 optionally an adhesion promoter,

wherein the size C.2 consists substantially of

C.2.1 50 to 100 wt.%, based on C.2, epoxy polymer and
C.2.2 0 to 50 wt.%, based on C.2, of one or more other polymers selected from the group of the polyurethanes, polyolefins, acrylate-containing polymers, styrene-containing polymers and polyamides,

D) 0 to 2 parts by weight rubber-modified graft polymers, and
E) 0.1 to 3 parts by weight commercial polymer additives,

the composition being free from rubber-modified polymers which differ from component D.

**2.** The composition according to claim 1, containing 20 to 35 parts by weight of rubber-free vinyl copolymer (component B).

**3.** The composition according to either of claims 1 and 2, which is free from rubber-modified graft polymers (component D).

**4.** The composition according to claim 1, in which, as the epoxy polymer C.2.1, an epoxy resin is used made from

C.2.1.1 epichlorohydrin and
C.2.1.2 an alcohol, which has at least two hydroxyl groups.

**5.** The composition according to claim 4, in which bisphenol A is used as the bifunctional alcoholic component C.2.1.2.

**6.** The composition according to one of claims 1 to 5, in which the sized glass fibre according to component C has a carbon content of 0.1 to 1 wt.%.

**7.** The composition according to one of claims 1 to 6, in which the glass fibre according to component C has an average diameter of 5 to 25 μm.

**8.** The composition according to one of claims 1 to 7, wherein as component E, at least one additive is contained, selected from the group consisting of flame retardants, anti-drip agents, lubricants and mould release agents, nucleating agents, antistatic agents, stabilisers, fillers and reinforcing materials other than component C, as well as dyes and pigments.

**9.** The composition according to claim 1, containing as component D a rubber-based graft polymer which is substantially free from double bonds.

**10.** The composition according to claim 9, containing as component D a rubber-based graft polymer selected from the group consisting of acrylate rubber, silicone rubber and silicone-acrylate composite rubber.

**11.** The composition according to one of the preceding claims, **characterized in that** the glass fibre is a long glass fibre having a length of from 5 to 50 mm.

**12.** The use of the composition according to one of claims 1 to 11 for the production of shaped articles.

**13.** Shaped articles containing a composition according to one of claims 1 to 11.

**Revendications**

**1.** Composition, contenant :

A) 40 à 70 parties en poids d'un polycarbonate, d'un polyester-carbonate ou d'un mélange de ceux-ci,
B) 10 à 50 parties en poids d'un copolymère de vinyle sans caoutchouc constitué par

B.1 70 à 80 % en poids, par rapport au composant B, de styrène et
B.2 20 à 30 % en poids, par rapport au composant B, d'acrylonitrile,

C) 5 à 50 parties en poids de fibres de verre encollées, le composant C étant une fibre de verre encollée comprenant

C.1 une fibre de verre choisie parmi au moins un composant du groupe constitué par une fibre filament, une fibre de verre longue et une fibre de verre découpée,
C.2 un produit d'encollage contenant un polymère d'époxyde et
C.3 éventuellement un promoteur d'adhésion, le produit d'encollage C.2 étant essentiellement constitué par
C.2.1 50 à 100 % en poids, par rapport à C.2, d'un polymère d'époxyde et

(suite)

C.2.2 0 à 50 % en poids, par rapport à C.2, d'un ou de plusieurs polymères supplémentaires, choisis dans le groupe des polyuréthanes, des polyoléfines, des polymères contenant de l'acrylate, des polymères contenant du styrène et des polyamides,

D) 0 à 2 parties en poids de polymères greffés modifiés avec du caoutchouc et
E) 0,1 à 3 parties en poids d'additifs usuels de polymères,
la composition étant exempte de polymères modifiés par du caoutchouc différents du composant D.

**2.** Composition selon la revendication 1, contenant 20 à 35 parties en poids d'un copolymère de vinyle sans caoutchouc (composant B).

**3.** Composition selon l'une quelconque des revendications 1 ou 2, qui est exempte de polymères greffés modifiés par du caoutchouc (composant D).

**4.** Composition selon la revendication 1, dans laquelle une résine époxyde fabriquée à partir de

C.2.1.1 de l'épichlorhydrine et
C.2.1.2 un alcool comprenant au moins deux groupes hydroxyle est utilisée en tant que polymère d'époxyde C.2.1.

**5.** Composition selon la revendication 4, dans laquelle le bisphénol A est utilisé en tant que composant alcoolique bifonctionnel C.2.1.2.

**6.** Composition selon l'une quelconque des revendications 1 à 5, dans laquelle les fibres de verre encollées selon le composant C présentent une teneur en carbone de 0,1 à 1 % en poids.

**7.** Composition selon l'une quelconque des revendications 1 à 6, dans laquelle les fibres de verre selon le composant C présentent un diamètre moyen de 5 à 25 μm.

**8.** Composition selon l'une quelconque des revendications 1 à 7, dans laquelle au moins un additif choisi dans le groupe constitué par les agents ignifuges, les agents anti-égouttement, les lubrifiants et les agents de démoulage, les agents de nucléation, les antistatiques, les stabilisateurs, les charges et les matières renforçantes différentes du composant C, ainsi que les colorants et les pigments, est contenu en tant que composant E.

**9.** Composition selon la revendication 1, contenant en tant que composant D un polymère greffé comprenant une base de caoutchouc, qui est essentiellement exempte de doubles liaisons.

**10.** Composition selon la revendication 9, contenant en tant que composant D un polymère greffé comprenant une base de caoutchouc choisie dans le groupe constitué par le caoutchouc d'acrylate, le caoutchouc de silicone et le caoutchouc composite de silicone-acrylate.

**11.** Composition selon l'une quelconque des revendications précédentes, **caractérisée en ce que** la fibre de verre est une fibre de verre longue d'une longueur de 5 à 50 mm.

**12.** Utilisation de la composition selon l'une quelconque des revendications 1 à 11 pour la fabrication de corps moulés.

**13.** Corps moulé contenant une composition selon l'une quelconque des revendications 1 à 11.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 0039210 A
- EP 1240250 A
- EP 0624621 A
- EP 0345652 A
- WO 8404317 A
- EP 0647679 A
- EP 1038920 A
- WO 2006040087 A
- DE AS1495626 B
- DE 2232877 A
- DE 2703376 A
- DE 2714544 A
- DE 3000610 A
- DE 3832396 A
- DE 3077934 A
- DE 2842005 A
- DE 3334782 A
- DE 2940024 A
- DE 3007934 A
- DE OS3704657 A
- DE OS3704655 A
- DE OS3631540 A
- DE OS3631539 A


### In der Beschreibung aufgeführte Nicht-Patentliteratur


- **SCHNELL.** Chemistry and Physics of Polycarbonates. Interscience Publishers, 1964
- **W. SCHOLTAN ; H. LANGE.** *Kolloid, Z. und Z. Polymere,* 1972, vol. 250, 782-1796
- **M. HOFFMANN ; H. KRÖMER ; R. KUHN.** Polymeranalytik I und II. Georg Thieme-Verlag, 1977